Europäisches Patentamt

European Patent Office

Office européen des brevets

(19)

(11) Veröffentlichungsnummer: **0 041 252**
**B1**

(12) **EUROPÄISCHE PATENTSCHRIFT**

(45) Veröffentlichungstag der Patentschrift:
**15.06.83**

(21) Anmeldenummer: **81104131.8**

(22) Anmeldetag: **29.05.81**

(51) Int. Cl.³: **F 16 L 9/18**, F 16 L 59/06

(54) **Wärmegedämmtes Heizleitungsrohr.**

(30) Priorität: **03.06.80 DE 3021045**

(43) Veröffentlichungstag der Anmeldung:
**09.12.81 Patentblatt 81/49**

(45) Bekanntmachung des Hinweises auf die Patenterteilung:
**15.06.83 Patentblatt 83/24**

(84) Benannte Vertragsstaaten:
**DE**

(56) Entgegenhaltungen:
**AT-B-326 428**
**US-A-4 037 626**

(73) Patentinhaber: **Fränkische Rohrwerke Gebr. Kirchner GmbH & Co., D-8729 Königsberg (DE)**

(72) Erfinder: **Kirchner, Helmuth, Scheubenweg 24, D-8729 Königsberg (DE)**

(74) Vertreter: **Berg, Wilhelm, Dr. et al, Dr. Berg, Dipl.-Ing. Stapf, Dipl.-Ing. Schwabe, Dr. Dr. Sandmair Mauerkircherstrasse 45, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Wärmegedämmtes Heizleitungsrohr

Die Erfindung betrifft ein wärmegedämmtes Heizleitungsrohr nach dem Oberbegriff des Anspruchs 1. Derartige Heizleitungsrohre setzen sich für die Gebäudeheizung immer mehr durch. Sie zeichnen sich durch leichte Verlegbarkeit unter bzw. im Estrich, niedrige Gestehungskosten, gute Wärmeisolierung und hohen mechanischen Schutz aus. Sie dienen in erster Linie der Verbindung von Heizkörpern untereinander und – das in erster Linie – mit Heizeinrichtungen oder einem Verteiler. Heizleitungsrohre mit den Merkmalen des Oberbegriffs des Anspruchs 1 sind z. B. aus der DE-U 7 004 901 bekannt.

Diese Leitungsrohre werden hergestellt, indem ein vorextrudiertes, genügend wärmebeständiges, glattwandiges Innenrohr – beispielsweise aus Polybuten, Propylen, vernetztem Polyäthylen – in ein gesondert extrudiertes Wellrohr aus Kunststoff eingeschoben wird, in dem es dann mit Spiel frei dehnbar liegt.

Gegenüber den früher üblichen, gegebenenfalls auch wärmeisolierten Heizleitungsrohren aus Metall zeichnen sich die durch die Erfindung verbesserten Rohre durch eine erheblich bessere Wärmedämmung aus. Die Erfindung will die Wärmedämmung der Leitungsrohre nach dem Oberbegriff des Anspruchs 1 weiter erheblich verbessern.

Dies wird gemäß der Erfindung durch die Ausbildung nach dem Kennzeichen des Anspruchs 1 erreicht. Bei der erfindungsgemäßen Ausbildung wird nicht nur die Wärmeleitung durch Berührung über das Wellrohr nach außen auf ein Mindestmaß verringert. Es wird ferner auch der Wärmetransport durch Konvektion weitgehend unterbunden. Das Eindringen von Mörtel in die äußeren Wellentäler des Wellrohres ist verhindert. Die Wärmedämmung wird bei der Erfindung durch den vom Wellrohr vielfach unterteilten, zylindrischen Luftmantel zwischen dem Hüllrohr und dem Innenrohr gebildet, die vom Wellrohr auf Distanz gehalten und zentriert sind. Der Luftmantel ist vom Wellrohr in radialer Richtung geteilt. Auch in axialer Richtung ist eine Luftströmung im Luftmantel zumindest stark erschwert. Messungen haben gezeigt, daß der Wärmedämmwert bei der Ausbildung gemäß der Erfindung weitaus besser ist als bei den vorbekannten Leitungsrohren nach dem Oberbegriff des Anspruchs 1. So läßt sich bei Leitungsdämmrohren nach der Erfindung ohne weiteres der heute geforderte Dämmwert von 0,06 W/m °K erreichen, was mit den bisher üblichen Heizleitungsrohren nach dem Oberbegriff des Anspruchs 1 nicht oder nur durch aufwendige, zusätzliche Isoliermaßnahmen möglich ist. Der Materialmehraufwand für die erfindungsgemäße Weiterbildung der bekannten wärmegedämmten Leitungsrohre ist sehr gering.

Zum Stande der Technik ist noch darauf hinzuweisen, daß es aus der DE-U 7 827 481 bekannt ist, Abwasserrohre großen Durchmessers aus Kunststoff zur Erhöhung der Festigkeit mit einem Wellrohr zu umgeben, das in kurzen Abständen mit dem Abwasserrohr verbunden ist und das nicht mit allen inneren Wellenrücken am Abwasserrohr anliegt, sondern nur mit beispielsweise jedem vierten inneren Wellenrücken.

Weiter ist es aus der US-A 4 037 626 bekannt, Abwasserrohre aus Kunststoff zur Erhöhung der Festigkeit mit einem am Rohr direkt anliegenden, gleichförmig ausgebildeten Wellrohr zu umgeben, welches von einem weiteren Rohr umhüllt ist.

Läßt man bei der erfindungsgemäßen Ausführung die Vorsprünge von den äußeren Wellentälern, nach innen ragen, so muß hierbei darauf geachtet werden, daß die von den Vorsprüngen freigelassene lichte Weite größer ist als der Außendurchmesser des glatten Rohres, da in der Regel ein gewisses Spiel zum Einschieben des letzteren erforderlich ist. Dieses Spiel der Vorsprünge hat den Vorteil, daß die Berührung zwischen dem Innenrohr und dem Wellrohr und damit der Wärmeübergang auf ein Mindestmaß verringert ist. Läßt man die Vorsprünge von den äußeren Wellenrücken nach außen ragen, so hat dies den Vorteil, daß die Herstellung des entsprechenden Werkzeuges für die Fertigung des Wellrohres besonders einfach wird. Bei dieser Ausbildung muß jedoch besonders darauf geachtet werden, daß der axiale Abstand der Vorsprünge voneinander und der zulässige kleinste Biegeradius im richtigen Verhältnis zueinander stehen, damit kein Einknicken des äußeren Hüllrohres erfolgt. Auch hierbei muß natürlich ein ausreichendes Spiel zwischen dem Wellrohr und dem Innenrohr gewahrt sein, um ein leichtes Einschieben des Innenrohres in das Wellrohr zu ermöglichen.

Das Wellrohr kann ein solches mit ringförmig verlaufenden Wellenrücken sein; die Wellenrücken können aber auch wendelförmig verlaufen. Normalerweise wird die Ausbildung mit ringförmigem Wellenrückenverlauf bevorzugt.

Die Fertigung des mit einem Hüllrohr versehenen Wellrohres kann nach einer bekannten Methode erfolgen. Am einfachsten geschieht dies, indem um das extrudierte Wellrohr mittels eines Querspritzkopfes das Hüllrohr herumextrudiert wird. Die beiden Extruder für das Wellrohr und das Hüllrohr können dabei unmittelbar hintereinander geschaltet sein.

Dem Grunde nach können die Vorsprünge, welche nach außen ragen, beispielsweise durch von den äußeren Wellentälern nach außen ragende Vorsprünge gebildet sein oder auch dadurch, daß ein Wellental durch einen die beiden benachbarten normalen Wellenrücken nach außen überragenden Wellenrücken ersetzt ist. Analog kann auch die Vorsprungsanordnung nach innen ausgebildet sein. Bevorzugt ist jedoch die Ausbildung gemäß Anspruch 2. Diese ist einfacher und beeinträchtigt auch die Festigkeit des Wellrohres weniger.

Bevorzugt sind die Vorsprünge gemäß Anspruch 3. Für eine solche Ausbildung ist zumindest bei ringförmig verlaufenden Wellenrücken die Herstellung des Werkzeugs für die Fertigung des Wellrohres einfacher.

Es ist jedoch auch eine Ausbildung gemäß Anspruch 4 möglich. Sollen bei dieser die Vorsprünge nach außen ragen, so sollte zweckmäßig die Anzahl der gleichmäßig über den Umfang verteilten Ausbuckelungen so groß sein, daß tatsächlich das Hüllrohr überall im Abstand vom gewellten Rohr gehalten wird. Geeigneter ist die Ausbildung, nach Anspruch 4 jedoch für die Ausbildung mit nach innen ragenden Einbuckelungen, bei welcher dann die Einbuckelungen das glatte Rohr im Abstand vom gewellten Rohr führen.

Bei der Anordnung von Aus- und Einbuckelungen ist wiederum die Ausbildung nach Anspruch 5 bevorzugt.

Das Gleiche gilt für Anspruch 6.

Für den axialen Abstand der Vorsprünge voneinander wird eine Ausbildung nach Anspruch 7 bevorzugt. Generell gilt hier, daß der axiale Abstand der Vorsprünge voneinander bei Anordnung der Vorsprünge nach innen größer sein kann als bei Anordnung der Vorsprünge nach außen, da bei letzterer das relativ flexible äußere Hüllrohr bei zu großem axialen Abstand sich zu leicht an das Wellrohr anlegt.

Sind sowohl nach außen als auch nach innen ragende Vorsprünge vorgesehen, so sind vorzugsweise die nach außen ragenden Vorsprünge gegenüber den nach innen ragenden Vorsprüngen um eine halbe Axialteilung der Vorsprünge versetzt, da hierdurch die geringste direkte Wärmeübertragung zwischen äußerem Hüllrohr und innerem glatten Rohr gewährleistet ist.

Nachfolgend ist die Erfindung anhand der in den schematischen Zeichnungen gezeigten Ausführungsbeispiele näher erläutert.

Fig. 1 zeigt einen Axialschnitt durch die bevorzugte Ausführungsform eines Heizleitungsrohres nach der Erfindung etwa in natürlicher Größe;

Fig. 2 zeigt stark vergrößert einen Teil von Fig. 1;

Fig. 3 zeigt in gleicher Darstellung wie Fig. 1 die Hälfte eines Axialschnitts durch eine andere Ausführungsform eines Heizleitungsrohres nach der Erfindung;

Fig. 4 und 5 zeigen in gleicher Darstellung wie Fig. 3 zwei weitere Ausführungsbeispiele.

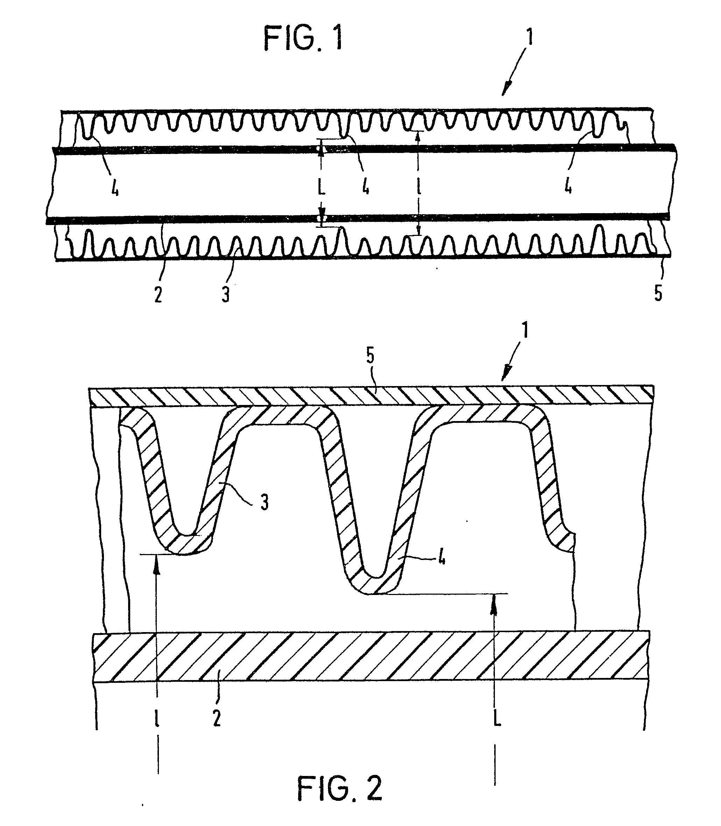

Das in Fig. 1 gezeigte Heizleitungsrohr besitzt in bekannter Weise ein z. B. aus Polypropylen extrudiertes, glattwandiges Innenrohr 2, das von einem gewellten Rohr 3, beispielsweise aus Polyäthylen hart, umgeben ist. Insoweit ist das Heizleitungsrohr 1 bekannt.

Im Gegensatz zu den vorbekannten Heizleitungsrohren ist bei der Erfindung die lichte Weite l des Wellrohres vergrößert, so daß letztere um etwa 4 bis 5 mm größer ist als der Außendurchmesser des Innenrohres 2. In Abhängigkeit von der Flexibilität des Innenrohres 2 ist in angemessenen Abständen von beispielsweise drei Außendurchmessern des glattwandigen Innenrohres 2 jeweils ein äußeres Wellental 4, das insoweit mit einem inneren Wellenrücken identisch ist, nach innen erhöht, so daß diese in wesentlichem Abstand voneinander verlaufenden inneren Ringrippen 4 von verringerter lichter Weite das Innenrohr 2 zentrisch führen, das nun an den anderen inneren Wellenrücken bzw. äußeren Wellentälern des gewellten Rohres nicht mehr anliegen kann, wobei der direkte Wärmeübergang sich wesentlich reduziert.

Wie aus der Zeichnung ersichtlich, ist die von einer inneren Ringrippe 4 freigelassene lichte Weite L nur noch etwa 2 mm größer als der Außendurchmesser des glatten Rohres 2, so daß dieses auch auf beträchtliche Längen noch leicht eingeschoben werden kann, wenn man es z. B. am vorauseilenden Ende in angemessener Weise anspitzt oder in dieses Ende eine Führungsspitze einsetzt, deren rückwärtiges Ende stetig in den Außenumfang des Innenrohres 2 übergeht.

Wie ferner aus der Zeichnung ersichtlich, wird durch die Ausbildung gemäß der Erfindung der Großteil des Innenrohres 2 auf Abstand vom gewellten Rohr 3 gehalten, so daß hier nicht nur ein Wärmeübergang von Rohr zu Rohr verhindert ist, sondern darüber hinaus auch ein besonders großer Luft- oder Gasisolierungsraum geringer Wärmeleitfähigkeit entsteht.

Gemäß der Erfindung ist ferner das gewellte Rohr 3 außen mit einem im wesentlichen glattwandigen Hüllrohr 5 vorzugsweise aus Polyäthylen weich umspritzt, welches satt an den äußeren Rücken der Wellung des Rohres 3 anliegt, die in diesem Ausführungsbeispiel ringförmig verläuft. Das Hüllrohr 5 kann mit den Rücken, an denen es anliegt, verklebt oder verschweißt sein.

Das satte Anliegen des Hüllrohres 5 wird beim Aufextrudieren desselben auf das gewellte Rohr 3 bewirkt, indem hierbei ein gewisser Unterdruck zwischen dem gewellten Rohr und dem Hüllrohr 5 aufrechterhalten wird. Diese Technik ist bekannt. Durch das Hüllrohr 5 ist auch eine Luftzirkulation zwischen den äußeren Wellentälern des gewellten Rohres 3 und der Umgebung des Heizleitungsrohres 1 unmöglich gemacht. Die Wärmeisolierung ist hierdurch weiter verbessert.

Im gezeigten Ausführungsbeispiel ist die lichte Weite L innerhalb der inneren Ringvorsprünge 4 immer noch rund 10% größer als der Außendurchmesser des Innenrohres. Bei entsprechend genauer Fertigung läßt sich dieses Spiel jedoch noch erheblich reduzieren. Es muß jedoch sichergestellt sein, daß das Maß L größer ist als der größte Außendurchmesser des Innenrohres 2.

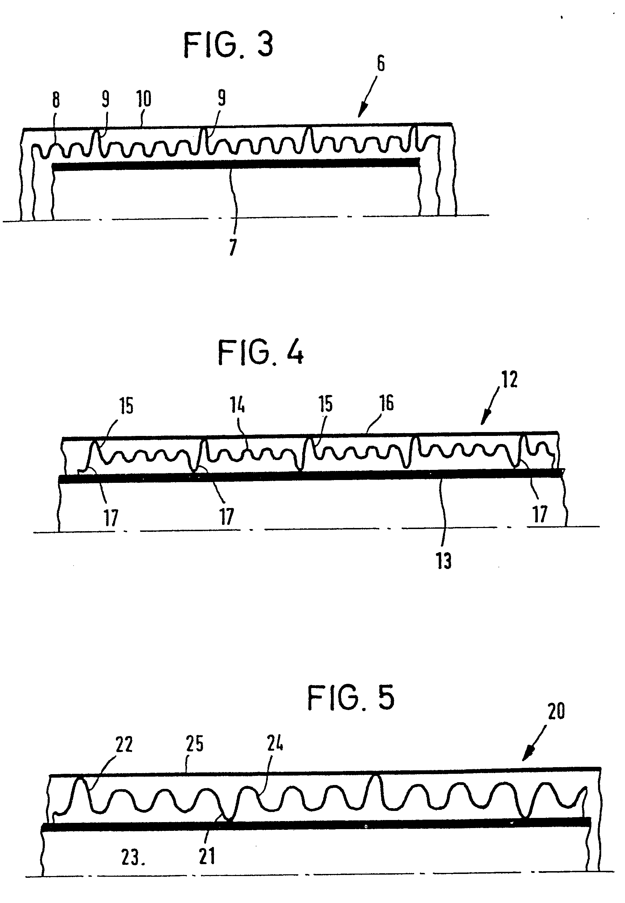

Das in Fig. 3 gezeigte Heizleitungsrohr 6 besitzt ein glattwandiges Innenrohr 7, beispielsweise aus vernetztem Polyäthylen, das mit einem gewellten Rohr 8, beispielsweise aus unvernetztem Polyäthylen umgeben ist, dessen lichte Weite um 2 mm größer ist als der Außendurchmesser des Innenrohres 7. In axialen Abständen von beispielsweise 1,2 Außendurchmessern des Innenrohres 7 ist jeweils eine ringförmig verlaufende Außenrippe 9 des gewellten Rohres 8 auf ihrem ganzen Umfang nach außen erhöht, wie dies in der Zeichnung gezeigt ist. Die erhöhten Rippen 9 können beispielsweise die benachbarten normalen Rippen des gewellten Rohres 8 um etwa 10% des Außendurchmessers des Wellrohres überragen. Um das so ausgebildete gewellte Rohr 8 ist in gleicher Weise wie im zuvor beschriebenen Beispiel ein Hüllrohr 10 extrudiert, welches lediglich außen an den Rippen 9 in der aus Fig. 3 ersichtlichen Weise anliegt. Auch auf diese Weise wird eine sehr gute Wärmeisolierung erzeugt. Bei einer derartigen Ausbildung muß jedoch der Abstand der von den Rippen 9 gebildeten Vorsprünge in Axialrichtung geringer sein, als dies bei einer Ausbildung gemäß Fig. 1 und 2 möglich ist, da andernfalls die Gefahr eines sich Anlegens des relativ weichen äußeren Hüllrohres 10, das zweckmäßig ebenfalls aus Polyäthylen besteht, zu groß würde.

Das in Fig. 4 gezeigte Heizleitungsrohr 12 besitzt ein glattes Innenrohr 13, beispielsweise aus Polybuten, das von einem gewellten Rohr 14, beispielsweise aus PVC, umgeben ist. Das gewellte Rohr 14 besitzt in etwa gleichen Axialabständen wie das gewellte Rohr 8 des Heizleitungsrohres 6 nach außen erhöhte, ebenso wie beim Rohr 6 ausgebildete Ringrippen 15, an welchen von außen ein Hüllrohr 16 aus geeignetem Kunststoff so anliegt, daß es im übrigen im Abstand vom gewellten Rohr 14 verläuft, wie dies aus Fig. 4 ersichtlich ist. Jeweils links neben der nach außen das Wellrohr überragenden Ringrippe 15 erstreckt sich, ähnlich wie bei dem Heizleitungsrohr 1, radial nach innen eine Ringrippe 17, welche die lichte Weite des Wellrohres 14 an den entsprechenden Stellen beispielsweise um 2 mm reduziert, so daß die lichte Weite im Bereich der inneren Ringrippen 17 nur noch 1 bis 2 mm größer ist als der Außendurchmesser des Innenrohres 13. Bei dieser Konstruktion sind die Vorteile der Konstruktionen gemäß Fig. 1 und 3 vereinigt. Will man hier den Außendurchmesser des Rohres niedrig halten, so kann man die Amplitude der Normalwellung des Rohres 14 verhältnismäßig klein halten, wie dies auch in Fig. 4 angedeutet ist. Die Verringerung der Amplitude wird jedoch begrenzt durch die erforderliche Druckfestigkeit und Flexibilität des Rohres, wobei die Teilung möglichst groß sein muß, um den Materialanteil des Wellrohres so gering wie möglich zu halten, da die Wärmeleitfähigkeit von PE recht hoch ist.

Das in Fig. 5 gezeigte Leitungsrohr 20 unterscheidet sich von dem Rohr 12 im wesentlichen nur dadurch, daß beim Rohr 20 die Axialteilung der Innen- und Außenrippen 21, 22 des Wellrohres 24 auf drei Außendurchmesser des Innenrohres 23 vergrößert ist und daß die Innenrippen 21 gegen die Außenrippen 22 in Axialrichtung um eine halbe Axialteilung versetzt sind. Dadurch ist der Weg der im Wellrohr 24 vom Innenrohr 23 in das Hüllrohr 25 strömenden Wärme sehr lang und der Wärmeübergang entsprechend gering.

Die Erfindung ist auch in den oben angedeuteten Beispielen anhand von Rohren erläutert, bei welchen die Wellung des gewellten Rohres genau in Umfangsrichtung, also ringförmig, verläuft. Verläuft die Wellung schraubenlinienförmig, so lassen sich die Grundsätze der Erfindung ebenso anwenden. Nur haben dann die das gewellte Rohr nach außen und/oder innen überragenden Ringrippen nicht die Form geschlossene Ringe, sondern die Form geöffneter Ringe, die an der Öffnungsstelle um ein Teilungsmaß der Welle auseinanderliegen.

Bei beiden Arten der Wellungen können, wie die Zeichnungen zeigen, die Ringe auch durch Reihen von Außen- oder Innenwarzen ersetzt sein, wobei die Zahl der Innenwarzen, die eine innere Führungsrippe 4 oder 17 ersetzen sollen, naturgemäß wesentlich geringer sein kann als die Zahl der Außenwarze, die eine Außenrippe 9 oder 15 ersetzen sollen.

Wegen der relativ großen Wärmeleitfähigkeit von Kunststoff im Gegensatz zur zwischenliegenden Luft- oder Gasschicht ist der Materialanteil im Bereich des Well-Hüllrohres durch eine möglichst große Wellenteilung gering zu halten. Der vorgegebene Außendurchmesser, die Wellenhöhe, die Scheiteldruckfestigkeit und die Flexibilität begrenzen die Wellenteilung nach oben.

**Patentansprüche**

1. In den Estrich einbettbares Heizleitungsrohr, bei welchem ein das Heizungswasser führendes, glattwandiges, biegsames Innenrohr (2) aus Kunststoff von einem der Wärmeisolierung dienenden, dünnwandigen Wellrohr (3) aus flexiblem Kunststoff umgeben ist, dessen Wandung im Axialschnitt gesehen gewellt verläuft, und dessen geringster Innendurchmesser größer ist als der Außendurchmesser des Innenrohres (2), dadurch gekennzeichnet, daß das Wellrohr (3, 8, 14) außen mit einem im wesentlichen glattwandigen Hüllrohr (5, 10, 16) aus flexiblem Kunststoff umhüllt ist, und daß das Wellrohr (3, 8 14) axial im Abstand voneinander angeordnete, die äußeren und/oder inneren Wellenrücken nach außen bzw. innen überragende, das Hüllrohr (5, 10, 16) bzw. das Innenrohr (2, 7, 13) auf Abstand vom Wellrohr (3, 8, 14) haltende Vorsprünge (4, 9, 15, 17) besitzt.

2. Leitungsrohr nach Anspruch 1, dadurch gekennzeichnet, daß die Vorsprünge (4, 9, 15, 17) von erhöhten äußeren Wellenrücken bzw. vertieften äußeren Wellentälern gebildet sind.

3. Leitungsrohr nach Anspruch 2, dadurch gekennzeichnet, daß sich jede Erhöhung (9, 15) bzw. Vertiefung (4, 17) über den ganzen Umfang des ringförmig gewellten Rohres (3, 8, 14) erstreckt.

4. Leitungsrohr nach Anspruch 1 oder 2, dadurch gekennzeichnet, daß die Vorsprünge jeweils von einer Mehrzahl über den Umfang verteilter Aus- bzw. Einbuckelungen gebildet sind.

5. Leitungsrohr nach Anspruch 4, dadurch gekennzeichnet, daß die Aus- bzw. Einbuckelungen jeweils vom äußeren Wellenrücken nach außen bzw. vom Grat des äußeren Wellentales nach innen aus- bzw. eingewölbt sind.

6. Leitungsrohr nach Anspruch 4 oder 5, dadurch gekennzeichnet, daß die Aus- bzw. Einbuckelungen gleichmäßig über den Umfang des Wellrohres verteilt sind.

7. Leitungsrohr nach einem der Ansprüche 1 bis 6, dadurch gekennzeichnet, daß der axiale Abstand der Vorsprünge (4, 9, 15, 17) größer als der Außendurchmesser des glatten Innenrohres (2, 7, 13) ist.

8. Leitungsrohr nach einem der Ansprüche 1 bis 7, dadurch gekennzeichnet, daß der axiale Abstand der Vorsprünge (4, 9, 15, 17) kleiner als der fünffache Außendurchmesser des glatten Innenrohres (2, 7, 13) ist.

## Claims

1. Floor heating conduit, suitable for being embedded in composite floors, where an inside flexible plastic pipe (2) with smooth walls and conducting the heating water is sheathed with a thin-walled corrugated pipe (3) out of flexible plastic serving for thermal insulation, the walls thereof being corrugated, seen in axial section, and where the smallest inside diameter is bigger than the outside diameter of the inner pipe (2) characterized in that the corrugated pipe (3, 8, 14) is sheathed outside with an essentially smooth walled sheathing pipe (5, 10, 16) made of flexible plastic material, and that the corrugated pipe (3, 8, 14) has axially, arranged at distances, projections, (4, 9, 15, 17) raising the outer and/or inner corrugation tops to the outside, inside resp., and maintaining the sheathing pipe (5, 10, 16), the inner pipe resp. (2, 7, 13) at a distance from the corrugated pipe (3, 8, 14).

2. Conduit acc. to claim 1, characterized in that the projections (4, 9, 15, 17) are formed by raised outer corrugation tops, deepened outer corrugation valleys resp.

3. Conduit acc. to claim 2, characterized in that each raising (9, 15) each cavity resp. (4, 17) extend over the entire circumference of the annular corrugated pipe (3, 8, 14).

4. Conduit acc. to claim 1 or 2, characterized in that the projections are respectively formed by a plurality of convexities and indentations placed around the circumference.

5. Conduit acc. to claim 4, characterized in that the convexities and indentations are arched, volted resp., from the outer corrugation top to the outside, from the crest of the outer corrugation valley to the inside resp.

6. Conduit acc. to claim 4 or 5, characterized in that the convexities, indentations resp., are equally distributed around the circumference of the corrugated pipe.

7. Conduit acc. to one of claims 1—6, characterized in that the axial distance of the projections (4, 9, 15, 17) is bigger than the outside diameter of the smooth inner pipe (2, 7, 13).

8. Conduit acc. to one of claims 1—7, characterized in that the axial distance of the projections (4, 9, 15, 17) is smaller than the quintable outside diameter of the smooth inner pipe (2, 7, 13).

## Revendications

1. Tube de chauffage, pour être encâstré en aire, où un tube intérieur, lisse et flexible (2) en matière plastique véhiculant l'eau chauffante, est enrobé d'un tube ondulé (3) en matière plastique flexible, aux parois minces et servant à l'isolation thermique, et dont la paroi est annelée — vue en coupe axiale — et dont le diamètre intérieur minimal est plus grand que le diamètre extérieur du tube intérieur (2), caractérisé en ce que le tube ondulé (3, 8, 14) est enrobé extérieurement d'un tube d'enrobage (5, 10, 16) essentiellement lisse en matière plastique flexible et que le tube ondulé (3, 8, 14) possède des sauts (4, 9, 15, 17) arrangés axialement à distances, surmontant les dos des ondulations exterieurs et/ou intérieurs vers l'extérieur, l'intérieur resp., maintenant le tube d'enrobage (5, 10, 16), le tube intérieur resp. (2, 7, 13) à distances du tube ondulé (3, 8, 14).

2. Conduit conf. à la revendication no. 1, caractérisé en ce que les sauts (4, 9, 15, 17) sont formés des dos d'ondulation extérieurs élévés, des vallées d'ondulation approfondies extérieurs resp.

3. Conduit conf. à la revendication no. 2, caractérisé en ce que chaque élévation (9, 15), chaque approfondissement (4, 17) resp. s'étend à travers le circuit entier du tube corrugé annulairement (3, 8, 14).

4. Conduit conf. à la revendication no. 1 ou 2, caractérisé en ce que les sauts sont respectivement formés d'une pluralité de convexités, indentations resp., reparties sur la circonférence.

5. Conduit conf. à la revendication no. 4, caractérisé en ce que les convexités ou les indentations sont voûtées, indentées resp., du dos extérieur de l'ondulation vers l'extérieur, du crête de la vallée de l'ondulation extérieur resp., vers l'interieur.

6. Conduit conf. à la revendication no. 4 ou 5, caractérisé en ce que les convexités, les indentations resp., sont regulièrement reparties sur la circonférence du tube ondulé.

7. Conduit conf. à une des revendications no. 1—6, caractérisé en ce que la distance axiale des sauts (4, 9, 15, 17) est plus grande que le diamètre extérieur du tube intérieur lisse (2, 7, 13).

8. Conduit conf. à une des revendications no. 1—7, caractérisé en ce que la distance axiale des sauts (4, 9, 15, 17) est plus petite que le diamètre extérieur quintuple du tube intérieur lisse (2, 7, 13).

## FIG. 1

## FIG. 2

# FIG. 3

8   9   10   9   6

7

# FIG. 4

15   14   15   16   12

17   17   17

13

# FIG. 5

22   25   24   20

23.   21